# EUROPÄISCHE PATENTSCHRIFT

(11) **EP 3 195 722 B1**
(45) Veröffentlichungstag und Bekanntmachung des Hinweises auf die Patenterteilung: **16.02.2022**
(21) Anmeldenummer: 17152085.1
(22) Anmeldetag: 19.01.2017
(51) Int. Cl.: A01G 17/06

(54) **PFAHL FÜR WEIN- ODER OBSTBAU**
POST FOR VINE OR FRUIT CULTIVATION
PIQUET POUR LA VITICULTURE

(30) Priorität: 19.01.2016 DE 102016100769
(43) Veröffentlichungstag der Anmeldung: 26.07.2017
(73) Patentinhaber: voestalpine Präzisionsprofil GmbH, 50354 Hürth (DE)
(72) Erfinder:
(74) Vertreter: Gesthuysen Patentanwälte

(56) Entgegenhaltungen:
- EP-A1- 2 921 045
- EP-A2- 1 232 684
- DE-U1- 29 911 927
- US-B1- 6 454 244

## Beschreibung

Die Erfindung betrifft einen Pfahl aus profilgewalztem Metallblech für den Wein- oder Obstbau, insbesondere Weinbergpfahl, mit einem im Wesentlichen U-förmigen Querschnitt mit einem U-Rücken und zwei U-Schenkeln, wobei an den U-Schenkeln je eine nach außen vorstehende Längsrippe ausgebildet ist, die einen nach innen offenen Querschnitt mit zwei Schenkeln aufweist. In den Längsrippen ist jeweils mindestens eine nach außen offene Aufnahmetasche zur Aufnahme eines Drahtes ausgebildet, wobei die Aufnahmetaschen jeweils zwei in den Schenkeln der Längsrippen ausgebildete, auf gleicher Höhe angeordnete Aufnahmefenster und eine zwischen den Aufnahmefenstern angeordnete und sich in Längsrichtung der Längsrippe erstreckende Zunge aufweisen, und wobei die beiden Aufnahmefenster einer Aufnahmetasche durch einen im Wesentlichen senkrecht zur Längserstreckung der Längsrippe verlaufenden Schlitz miteinander verbunden sind, so dass ein Draht durch den Schlitz in die Aufnahmetasche hineingelegt bzw. aus der Aufnahmetasche her-ausgehoben werden kann.

Derartige Pfähle werden seit Jahrzehnten insbesondere als Weinbergpfähle eingesetzt. Die Pfähle werden dabei in der Regel zeilenweise zueinander angeordnet, wobei die Pfähle im Wesentlichen senkrecht in den Erdboden eingedrückt werden. Dabei haben bereits seit vielen Jahren aus profilierten bzw. profilgewalzten Metallblechen, insbesondere Stahlblechen, hergestellte Pfähle die ursprünglich verwendeten Holzpfähle verdrängt, da Holzpfähle bei der zunehmenden Verwendung von landwirtschaftlichen Maschinen im Weinbau nur bedingt geeignet sind. Bei Holzpfählen besteht das Problem darin, dass sich bei der maschinellen Ernte die in die Holzpfähle eingeschlagenen Haken und Krampen lösen, was zum einen zu einer Beschädigung der Drahtrahmen führt, zum anderen können die Haken und Krampen zusammen mit den Trauben in die Pressen und Maischepumpen gelangen, wo es zu dann ebenfalls zu Beschädigungen kommen kann.

Zunächst sind dabei einfach profilierte Pfähle mit aus dem Blech ausgestanzten und abgebogenen Haken zum Einhängen und Befestigen der Drähte verwendet worden. Bei derartigen Pfählen mit sogenannten "außenliegenden" Haken ist sowohl das Einhängen als auch das maschinelle Aushängen der Drähte sehr einfach möglich. Es besteht jedoch die Gefahr, dass die Haken durch den Einsatz der Maschinen, insbesondere durch die Schlagstöcke der Vollerntemaschinen beschädigt, insbesondere zusammengedrückt werden, so dass die Haken vor dem Umhängen der Drähte von Hand wieder aufgebogen werden müssen, was mit einem entsprechenden Mehraufwand verbunden ist.

Aus der DE 35 33 963 C2 ist ein U-förmiger Pfahl bekannt, der an den Enden der beiden U-Schenkel je eine einwärts gerichtete Rinne aufweist, die nach außen über die U-Schenkel hervorsteht. An den U-Schenkeln sind außenliegenden Haken ausgebildet, wobei neben dem Haken je ein Vorsprung vorgesehen ist, der dazu dient, den im Haken gehaltenen Draht vor ungewolltem Aushängen zu sichern. Der Vorsprung wird dabei dadurch gebildet, daß die einwärts gerichtete Rinne auf Höhe des Hakens flachgedrückt ist. Zum Umhängen des Drahtes ist es dabei jedoch erforderlich, den Draht bezogen auf seine Längsrichtung stark abzuknicken, was bei unter Spannung stehenden Drähten nur mit großem Kraftaufwand möglich ist.

Seit vielen Jahren werden daneben auch Pfähle mit sogenannten "innenliegenden" Haken verwendet, bei denen die Haken durch eine entsprechende Ausgestaltung des Pfahles vor einer Beschädigung geschützt sind. Weinbergpfähle mit innenliegenden Haken sind in verschiedenen Variationen seit vielen Jahren bekannt. Die Pfähle weisen einen etwa U-förmigen Querschnitt auf, wobei an den beiden U-Schenkeln nach außen vorstehende Längsrippen ausgebildet sind, die einen ihrerseits etwa U-förmigen, nach innen offenen Querschnitt aufweisen. In den Längsrippen sind Aufnahmetaschen für die Drähte ausgebildet, die aus einer im U-Rücken der Längsrippen ausgebildeten Zunge - dem innenliegenden Haken - und je einem in den U-Schenkeln der Längsrippen ausgebildeten Aufnahmefenster bestehen. Die beiden Aufnahmefenster sind durch einen zwischen dem freien Ende der Zunge und dem U-Rücken gebildeten Schlitz miteinander verbunden, so dass der Draht durch den Schlitz in die Aufnahmetasche hineingelegt bzw. aus der Aufnahmetasche herausgehoben werden kann. Dadurch, dass die Zunge aus dem U-Rücken der Längsrippe gebildet wird und mit diesem in einer Ebene liegt, ist die Gefahr, dass die Zunge durch die Schlagstöcke der Vollerntemaschine umgebogen und damit die Aufnahmetasche zugerückt wird, wesentlich verringert.

Ein derartiger Weinpfahl ist beispielsweise aus der DE 25 60 090 C2 bekannt. Bei diesem bekannten Weinbergpfahl verläuft der Schlitz zwischen den beiden Aufnahmefenstern unter einem Winkel von etwa 30° zur Horizontalen und damit auch zur Drahtrichtung, wodurch ein ungewolltes Aushängen des Drahtes aus der Aufnahmetasche im Normalfall verhindert wird. Ein ungewolltes Aushängen eines Drahtes kann beispielsweise durch dynamische Vorgängen wie böige Winde oder rhythmisch arbeitende landwirtschaftliche Maschinen verursacht werden. Die schräge Ausbildung des Schlitzes führt dabei jedoch nicht nur dazu, dass ein ungewoltes Aushängen eines Drahtes verhindert wird, sondern gleichzeitig auch dazu, dass das gewollte Umhängen der Drähte nur mit großem Aufwand möglich ist. Ein Draht muss nämlich wegen der Schrägstellung des Schlitzes abgebogen werden, damit er in die Aufnahmetasche eingehängt bzw. aus der Aufnahmetasche herausgenommen werden kann.

Ein gewolltes Umhängen der Drähte ist jedoch insbesondere während der Vegetationszeit notwendig, damit das Wachstum der Triebe nicht behindert wird. Damit bei dem bekannten Weinbergpfahl ein Draht ohne Beschädigung und auch unter der Last der Trauben aus einer Aufnahmetasche in einer ersten Ebene ausgehängt und in eine andere Aufnahmetasche in einer zweiten Ebene eingehängt werden kann, ist es daher in der Regel erforderlich, die Drähte vor dem Umhängen von den Endpfählen zu lösen oder jedenfalls die Spannung, mit der die Drähte gespannt sind, deutlich zu verringern. Beides ist mühsam und erfordert einen erhöhten Zeitaufwand.

In der EP 1 232 684 B1 wird daher ein eingangs beschriebener Pfahl aus profilgewalztem Stahlblech vorgeschlagen, bei dem der Schlitz zwischen den beiden Aufnahmefenstern einer Aufnahmetasche im Wesentlichen senkrecht zur Längserstreckung des Pfahls und damit parallel zur Längsrichtung des Drahtes ausgebildet ist. Dadurch kann auch ein unter Zugspannung stehender Draht einfach in die Aufnahmetasche eingelegt bzw. aus der Aufnahmetasche herausgehoben werden. Um ein ungewolltes Aushängen eines Drahtes aus einer Aufnahmetasche zu verhindern, ist bei dem aus der EP 1 232 684 B1 bekannten Weinbergpfahl in etwa auf Höhe der einzelnen Aufnahmetaschen jeweils ein zusätzlicher Vorsprung aus den U-Schenkeln des Pfahls herausgeformt, wobei die Unterkante des Vorsprungs unterhalb des Schlitzes der Aufnahmetasche angeordnet ist und vom Boden der Aufnahmetasche einen Abstand aufweist, der größer als der Durchmesser des zu befestigenden Drahtes ist. Der so ausgebildete Vorsprung verhindert, dass ein Draht aufgrund von Schlägen oder Vibration ungewollt durch den Schlitz aus der Aufnahmetasche herausgelangt. Wenn die lichte Weite zwischen der Zunge der Aufnahmetasche und der äußersten Kante des Vorsprungs so groß wie oder etwas größer als der Durchmesser des zu befestigenden Drahtes ist, lässt sich dabei ein Draht trotz der Ausbildung des Vorsprunges noch einfach aus der Aufnahmetasche herausheben, indem der Draht entlang der Zunge senkrecht nach oben bewegt wird. Die Ausbildung der Vorsprünge in den U-Schenkeln der Längsrippen ist jedoch mit einem erhöhten Herstellungsaufwand verbunden.

US6454244B1 offenbart einen Pfahl aus profilgewalztem Metallblech für den Wein- oder Obstbau gemäß dem Oberbegriff des Anspruchs 1.

Der vorliegenden Erfindung liegt daher die Aufgabe zugrunde, einen eingangs beschriebenen Pfahl aus profilgewalztem Metallblech, insbesondere aus Stahlblech, dahingehend zu verbessern, dass er möglichst einfach hergestellt werden kann. Dabei soll ein Draht möglichst einfach ein- und umgehängt werden können, aber trotzdem weitestgehend gegen ungewolltes Aushängen gesichert sein. Außerdem soll der Pfahl so ausgebildet sein, dass er eine möglichst hohe Stabilität aufweist, so dass er auch starken Stürmen und heftigen Gewittern dauerhaft Stand hält.

Diese Aufgabe ist bei dem eingangs beschriebenen Pfahl mit den kennzeichnenden Merkmalen des Patentanspruchs gelöst.

Im Unterschied zu den aus der Praxis bekannten Pfählen sind bei dem erfindungsgemäßen Pfahl die Längsrippen nicht im Bereich der freien Enden der U-Schenkel oder in etwa in der Mitte der U-Schenkel, sondern am Übergang zum U-Rücken ausgebildet. Dies führt zu einer etwas veränderten Querschnittsform des Pfahls, die zu einer höheren Stabilität der einzelnen Pfähle sowohl in Längs- als auch in Querrichtung der Zeilen, in den die Pfähle angeordnet sind, führt, wie in Untersuchungen herausgefunden worden ist.

Durch die Ausbildung mindestens eines Vorsprunges, der in ein Aufnahmefenster der einzelnen Aufnahmetaschen hineinragt, wird ein einmal in die Aufnahmetasche hineingelegter Draht daran gehindert, aufgrund von Schlägen oder Vibrationen ungewollt durch den Schlitz aus der Aufnahmetasche herauszurutschen. Durch den Vorsprung wird dabei gewollt eine Engstelle im Aufnahmefenster realisiert, die ein Draht zwar geführt passieren kann, die jedoch die Gefahr des ungewollten Herausrutschens des Drahtes aus der Aufnahmetasche deutlich reduziert. Der Vorsprung, der an einem Schenkel der Längsrippe ausgebildet ist, erstreckt sich dabei im Wesentlichen senkrecht zur Längserstreckung der Längsrippe in das Aufnahmefenster, so dass das Aufnahmefenster jedenfalls an der Seite des Vorsprungs keinen geraden, senkrechten Seitenrand, sondern einen geschwungenen bzw. gewellten Seitenrand aufweist. Auch wenn grundsätzlich bereits durch die Ausbildung nur eines Vorsprungs in einem der beiden Aufnahmefenster einer Aufnahmetasche die Gefahr eines ungewollten Herausrutschens eines Drahtes aus der Aufnahmetasche verringert wird, sind erfindungsgemäß an beiden Aufnahmefenstern der Aufnahmetasche entsprechende Vorsprünge ausgebildet, wodurch die Gefahr eines ungewollten Aushängens des Drahtes weiter reduziert wird.

Gemäß einer vorteilhaften Ausgestaltung des erfindungsgemäßen Pfahls weisen die beiden Längsrippen jeweils einen im Wesentlichen V-förmigen Querschnitt auf, wobei der eine Schenkel der Längsrippe unmittelbar am U-Rücken des Pfahls angrenzt. Die jeweiligen Zungen sind dabei mittig zwischen den in den Schenkeln ausgebildeten Aufnahmefenstern im Bereich des Scheitels der Längsrippen angeordnet, so dass auch die Zungen einen im Wesentlichen V-förmigen Querschnitt aufweisen. Die Zungen sind dadurch nicht - wie im Stand der Technik - flach, sondern V-förmig gewölbt ausgebildet, wodurch die Zungen selber eine größere Stabilität aufweisen. Die Gefahr, dass eine Zunge durch ein Teil einer Maschine, beispielsweise die Schlagstöcke einer Vollerntemaschine verbogen wird, ist dadurch weiter reduziert.

Gemäß einer weiteren bevorzugten Ausgestaltung des erfindungsgemäßen Pfahles ist das den Schlitz des Aufnahmefensters begrenzende freie Ende der Zunge breiter ausgebildet als der mit der Längsrippe verbundene Fußbereich der Zunge. Durch diese Ausgestaltung der Zunge in Verbindung mit dem im Wesentlichen V-förmigen Querschnitt der Zunge wird erreicht, dass das Aufnahmefenster auch auf der dem Vorsprung abgewandten Seite einen nicht gerade bzw. senkrecht verlaufenden Seitenrand aufweist. Dadurch, dass das freie Ende der Zunge breiter ausgebildet ist, ragt die Zunge mit ihrem verbreiterten Abschnitt etwas in das Aufnahmefenster hinein, wodurch die Breite des Aufnahmefensters auch in diesem Bereich verringert ist. Das Aufnahmefenster kann dadurch im unteren Bereich, der den Boden der Aufnahmetasche bildet, eine Breite aufweisen, die größer als der Durchmesser des einzulegenden Drahtes ist, so dass der Draht in seiner Normalposition, in der er auf dem Boden der Aufnahmetasche aufliegt, durch die Aufnahmefenster nicht eingeklemmt ist, sondern mit etwas Spiel in der Aufnahmetasche ruht. Die Gefahr eines ungewollten Herausrutschens des Drahtes aus der Aufnahmetasche wird jedoch durch den seitlichen Vorsprung und das verbreiterte freie Ende der Zunge deutlich reduziert. Gleichzeitig ist jedoch sowohl das Einhängen eines Drahtes in die Aufnahmetasche als auch das gewollte Aushängen des Drahtes einfach möglich, wobei insbeonsdere ein Abbiegen des Drahtes nicht erforderlich ist. Der Draht muss nur durch den Schlitz in die Aufnahmetasche eingeführt und entlang der etwas S-förmigen Kontur der Aufnahmefenster auf den Boden der Aufnahmetasche geführt werden bzw. umgekhert vom Boden der Aufnahmetasche angehoben und durch den Schlitz aus der Aufnahmetasche herausgeführt werden.

Herstellungstechnisch lassen sich die Aufnahmetaschen in den Längsrippen dadurch einfach herstellen, dass vor dem Profilwalzen entsprechende Ausstanzungen in den entsprechenden Bereichen des Metallblechs herausgestanzt werden, die nach dem Profilwalzen und Abbiegen die Aufnahmefenster und den die Aufnahmefenster miteinander verbindenden Schlitz in den Längsrippen bilden. Vorzugsweise ist die Kontur der Ausstanzung dabei so gewählt, dass die beiden Aufnahmefenster die gleiche Form aufweisen. Dies bedeutet, dass in beide Aufnahmefenster der Aufnahmetasche jeweils ein an dem entsprechenden Schenkel ausgebildeter Vorsprung hineinragt, wobei die Vorsprünge und die Zunge vorzugsweise jeweils spiegelsymmetrisch zur Längsachse der Längsrippe ausgebildet sind, so dass die Aufnahmefenster ebenfalls spiegelsymmetrisch zur Längsachse der Längsrippe ausgebildet sind und in Längsrichtung des Drahtes zueinander fluchten.

Insbesondere dann, wenn der erfindungsgemäße Pfahl im Weinbau eingesetzt wird, es sich somit um einen sogenannten Weinbergpfahl handelt, sind in beiden Längsrippen des Pfahls jeweils mehrere Aufnahmetaschen in Längserstreckung des Pfahls übereinander angeordnet. Der Abstand der einzelnen Aufnahmetaschen zueinander ist dabei in der Regel stets gleich, wobei der Abstand vorzugsweise weniger als 100 mm, insbesondere nur etwa 70 mm beträgt, wodurch das Umhängen der Drähte während der Vegetationszeit erleichtert und eine hohe Variabilität erreicht wird.

Gemäß einer weiteren vorteilhaften Ausgestaltung ist dabei die Orientierung der untersten Aufnahmetasche relativ zu den anderen Aufnahmetaschen um 180° gedreht. Bei der untersten Aufnahmetasche ist somit der Boden der Aufnahmetasche oberhalb des Schlitzes angeordnet, d. h. die unterste Aufnahmetasche steht im Vergleich zu den anderen Aufnahmetaschen auf dem Kopf. Der unterste Haken bzw. die unterste Aufnahmetasche bietet die Möglichkeit, die Drähte in die unterste Aufnahmetasche einzuhängen, so dass die Drähte beim mechanisierten Ausheben bzw. Ausschneiden des Altholzes aus den Rebstocken im Frühjahr nicht nicht ungewollt aus den Aufnahmetaschen herausspringen können.

Gemäß einer letzten vorteilhaften Ausgestaltung des erfindungsgemäßen Pfahles, die hier noch kurz erläutert werden soll, sind im U-Rücken des Pfahles vorzugsweise mehrere Ausnehmungen vorgesehen, die bei der Herstellung des Pfahles aus dem Rücken ausgestanzt werden. Die Ausnehmungen können dabei vorzugsweise als kreisförmige Löcher oder als Langlöcher ausgebildet sein und dienen zur Aufnahme von Zubehörartikeln, wie Drahtauslegern oder Bewässerungssystemen.

Im Einzelnen gibt es nun eine Vielzahl von Möglichkeiten, den erfindungsgemäßen Pfahl auszugestalten und weiterzubilden. Dazu wird verwiesen sowohl auf die dem Patentanspruch 1 nachgeordneten Patentansprüche als auch auf die nachfolgende Beschreibung eines bevorzugten Ausführungsbeispiels in Verbindung mit der Zeichnung. In der Zeichnung zeigen
- Fig. 1: den oberen Endbereich eines Pfahls für den Weinbau in einer Frontalansicht,
- Fig. 2: den Pfahl gemäß Fig. 1, im Querschnitt,
- Fig. 3: eine vergrößerte Seitenansicht eines Teils des oberen Endbereichs des Pfahls gemäß Fig. 1,
- Fig. 4: eine vergrößerte Darstellung einer in einer Längsrippe des Pfahls ausgebildeten Aufnahmetasche, in Seitenansicht, und
- Fig. 5: eine Seitenansicht eines unteren Abschnitts des Pfahls.

Bei dem in den Figuren dargestellten Pfahl 1 handelt es sich um einen Pfahl 1 für den Weinbau, so dass dieser nachfolgend auch als Weinbergpfahl bezeichnet wird. Derartige Weinbergpfähle 1 werden in der Praxis häufig auch als Weinberstickel oder nur als Stickel bezeichnet. Der Weinbergpfahl 1 wird aus einem Metallblech, insbesondere einem Stahlblech, durch Profilwalzen und Ausstanzen hergestellt, wobei das Stahlblech in der Regel verzinkt und/oder beschichtet ist. Neben einer Bandverzinkung kann auch eine Stückverzinkung des fertigen Stickels erfolgen, wodurch eine maximale Haltbarkeit des Pfahles 1 gewährleistet wird.

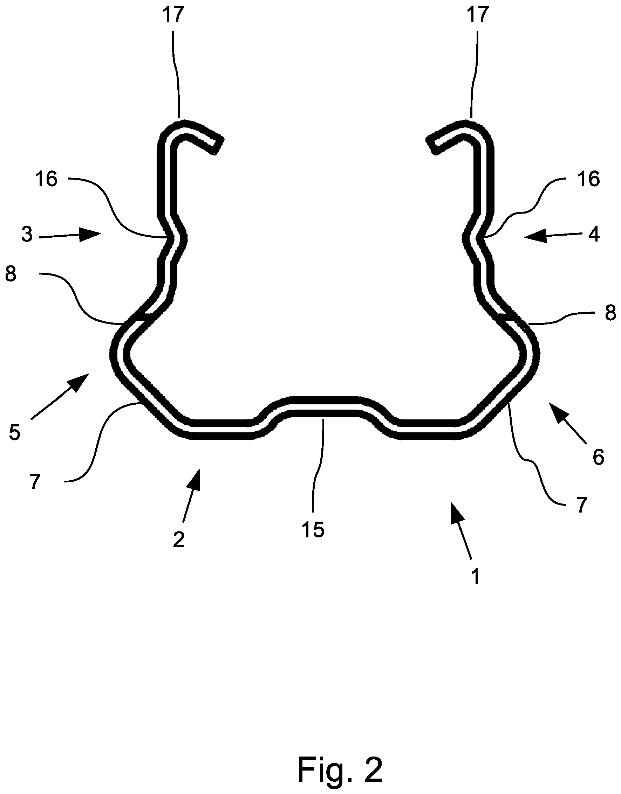

Die Figuren zeigen lediglich Teile bzw. Abschnitte des vollständigen Weinbergpfahls 1, der in der Regel eine Länge zwischen 1,40 m und 3,0 m und eine Dicke von 1,25 mm bis 2,00 mm aufweist. Wie insbesondere aus Fig. 2 ersichtlich ist, weist der Pfahl 1 einen näherungsweise U-förmigen Querschnitt mit einem U-Rücken 2 und zwei U-Schenkeln 3, 4 auf. An den beiden U-Schenkeln 3, 4 ist jeweils eine nach außen vorstehende Längsrippe 5, 6 ausgebildet, die einen nach innen offenen Querschnitt mit zwei Schenkeln 7, 8 aufweisen. Die Längsrippen 5, 6 sind dabei am Übergang vom U-Rücken 2 zu den U-Schenkeln 3,4 ausgebildet, so dass die Schenkel 7 der Längsrippen 5, 6 unmittelbar am U-Rücken 2 anschließen.

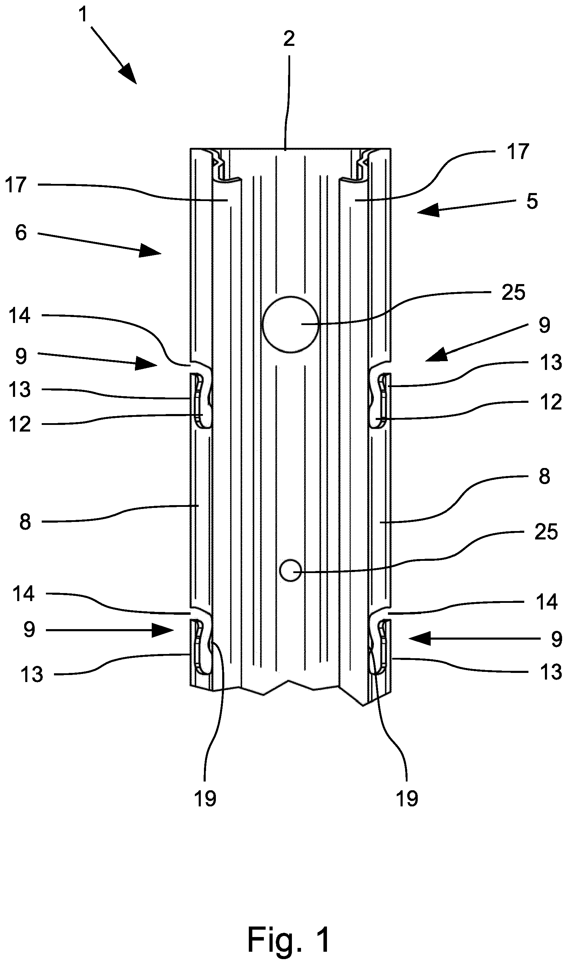

Wie aus Fig. 1 ersichtlich ist, sind in den Längsrippen 5, 6 jeweils mehrere nach außen offene Aufnahmetaschen 9 zur Aufnahme von Drähten 10 ausgebildet, wobei die Aufnahmetaschen 9 in den beiden Längsrippen 5, 6 jeweils auf gleicher Höhe angeordnet sind, so dass sich immer zwei Aufnahmetaschen 9 in einer Ebene befinden. Da die einzelnen Aufnahmetaschen 9 gleich ausgebildet sind, gelten die nachfolgenden Ausführungen, die sich nur auf eine Aufnahmetasche 9 beziehen, grundsätzlich für alle Aufnahmetaschen 9, sofern nichts anderes ausgeführt ist.

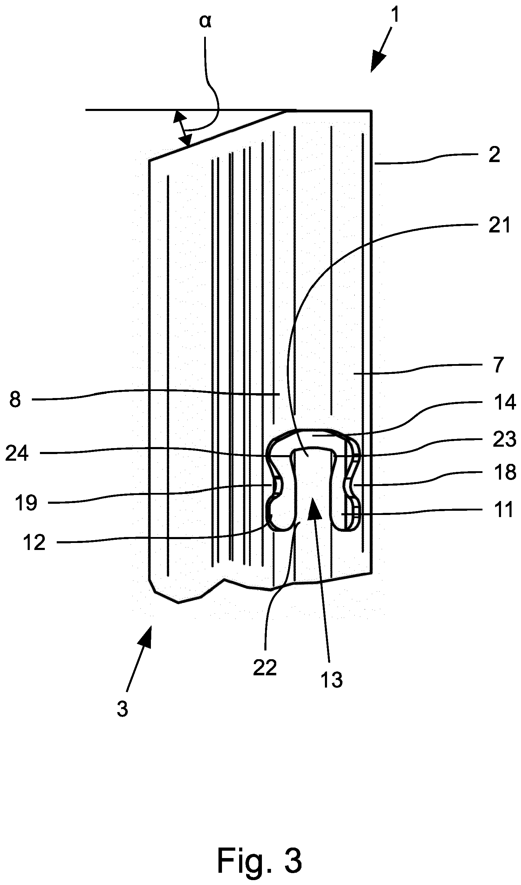

Wie insbesondere aus Fig. 3 ersichtlich ist, weist eine Aufnahmetasche 9 zwei in den Schenkeln 7, 8 einer Längsrippe 5 bzw. 6 ausgebildete Aufnahmefenster 11, 12 und eine zwischen den beiden Aufnahmefenstern 11, 12 angeordnete Zunge 13 auf. Die Aufnahmefenster 11, 12 einer Aufnahmetasche 9 sind dabei auf gleicher Höhe angeordnet, so dass die Aufnahmefenster 11, 12 in Längsrichtung des Drahtes 10 zueinander fluchten. Die beiden Aufnahmefenster 11, 12 einer Aufnahmetasche 9 sind durch einen im Wesentlichen senkrecht zur Längserstreckung der Längsrippe 5, 6 bzw. der Zunge 13 verlaufenden Schlitz 14 miteinander verbunden, so dass ein Draht 10 durch den Schlitz 14 in die Aufnahmetasche 9 hineingelegt bzw. aus der Aufnahmetasche 9 herausgehoben werden kann.

Aus der Querschnittsdarstellung gemäß Fig. 2 ist erkennbar, dass die beiden Schenkel 7, 8 der Längsrippen 5, 6 unter einem Winkel von etwa 90° zueinander angeordnet sind, so dass die Längsrippen 5, 6 einen V-förmigen Querschnitt aufweisen. Da die Zungen 13 jeweils im Bereich des Scheitels der Längsrippen 5, 6 angeordnet sind, weisen auch die Zungen 13 einen etwa V-förmigen Querschnitt auf, so dass die Zungen 13 nicht flach, sondern gewölbt ausgebildet sind. Durch den so gewählten Querschnitt des Pfahls 1 ist der Pfahl 1 sehr stabil, so dass der Pfahl 1 sowohl in Längsrichtung eines Drahtes 10 als auch quer dazu eine hohe Stabilität aufweist. Auch die Zungen 13 sind durch ihren V-förmigen Querschnitt sehr stabil, so dass die Gefahr einer Beschädigung der als innenliegende Haken wirkenden Zungen 13 nochmals reduziert ist. Die Stabilität des Pfahls 1 ist dadurch weiter erhöht, dass im U-Rücken 2 eine Sicke 15 ausgebildet ist. Entsprechende Sicken 16 sind auch in den U-Schenkeln 3, 4 ausgebildet, die zusammen mit den nach innen abgebogenen Endbereichen 17 der U-Schenkel 3, 4 die Stabilität des Weinbergpfahls 1 weiter erhöhen.

Zur Sicherung eines Drahtes 10 in einer Aufnahmetasche 9 gegen ungewolltes Aushängen ist an den beiden Schenkeln 7, 8 der Längsrippen 5 bzw 6 jeweils ein Vorsprung 18, 19 ausgebildet, der in das jeweilige Aufnahmefenster 11, 12 hineinragt. Dies führt dazu, dass das Aufnahmefenster 11, 12 im Bereich des Vorsprungs 18, 19 eine verringerte Breite B₁ aufweist. Die Breite B₁ ist dabei geringer als die maximale Breite Bₘₐₓ, die das Aufnahmefenster 11, 12 in der Nähe seines unteren Randes 20, der den Boden der Aufnahmetasche 9 bildet, aufweist. Zusätzlich ist das den Schlitz 14 begrenzende freie Ende 21 der Zunge 13 breiter ausgebildet als der mit der Längsrippe 5, 6 verbundene Fußbereich 22 der Zunge 13. Dadurch, dass das freie Ende 21 der Zunge 13 breiter ausgebildet ist, ragt die Zunge 13 mit ihren am freien Ende 21 seitlich vorstehenden Vorsprüngen 23, 24 etwas in das jeweilige Aufnahmefenster 11, 12 hinein, so dass die Aufnahmefenster 11, 12 auch im Bereich des freien Endes 21 der Zunge 13 eine verringerte Breite B₂ aufweisen. Die Breite B₁ entspricht dabei vorzugsweise im Wesentlichen der Breite B₂, so dass die Aufnahmefenster 11, 12 jeweils zwei Engstellen aufweisen, wobei die Breite der Aufnahmefenster 11, 12 entlang des gesamten Aufnahmefensters 11, 12 jedoch mindestens so groß wie der Durchmesser des einzulegenden Drahtes 10 ist.

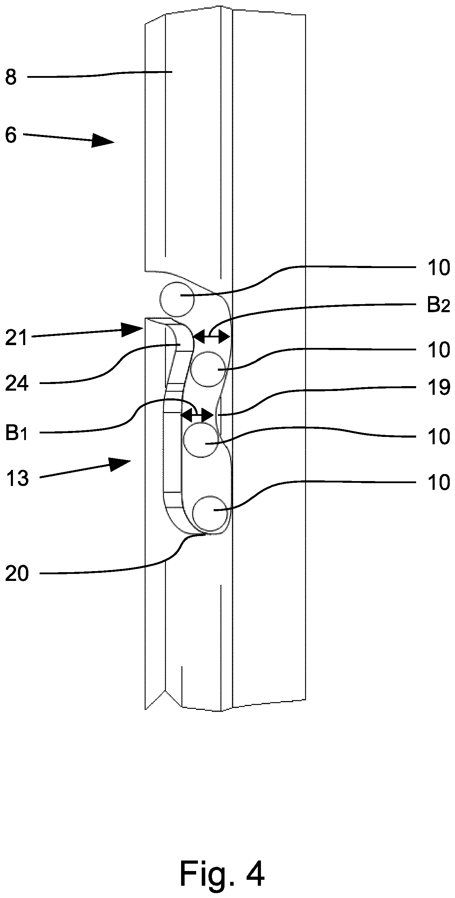

Wie aus der Darstellung gemäß den Fig. 3 und 4 erkennbar ist, weist das Aufnahmefenster 11 bzw. 12 durch die Ausbildung der Vorsprünge 18 bzw. 19 und 23 bzw. 24 zwei geschwungene bzw. gewellte Seitenränder auf. Beim Einführen eines Drahtes 10 in die Aufnahmetasche 9 muss der Draht 10 somit nicht senkrecht sondern leicht S-förmig nach unten bewegt werden, wie dies in Fig. 4 durch die Darstellung des Drahtes 10 in verschiednene Positionen innerhalb des Aufnahmefensters 11 angedeutet ist. Diese leicht geschwungene Form der Aufnahmefenster 11, 12 führt dazu, dass ein Draht 10 einerseits einfach gewollt in eine Aufnahmetasche 9 eingelegt bzw. aus der Aufnahmetasche 9 herausgehoben werden kann, andererseits jedoch die Gefahr eines ungewollten Aushängens des Drahtes 10 aus einer Aufnahmetasche 9 sehr stark verringert ist.

Aus der Seitenansicht des oberen Endbereichs des Weinbergpfahls 1 gemäß Fig. 3 ist erkennbar, dass die beiden Aufnahmefenster 11, 12 zusammen mit dem Schlitz 13 in Draufsicht eine etwa Ω-förmige Kontur aufweisen, die einfach vor dem Profilwalzen und Umbiegen des Pfahles 1 aus dem Metallbelch ausgestanzt werden kann. Darüber hinaus ist aus der Fig. 3 erkennbar, dass die beiden Aufnahmetaschen 11, 12 und die Zunge 13 jeweils spiegelsymmetrisch zur Längsachse der Längsrippe 5, 6 ausgebildet sind, so dass die Aufnahmefenster 11, 12 in Längsrichtung des Drahtes 10 zueinander fluchten, wie dies auch aus Fig. 1 erkennbar ist.

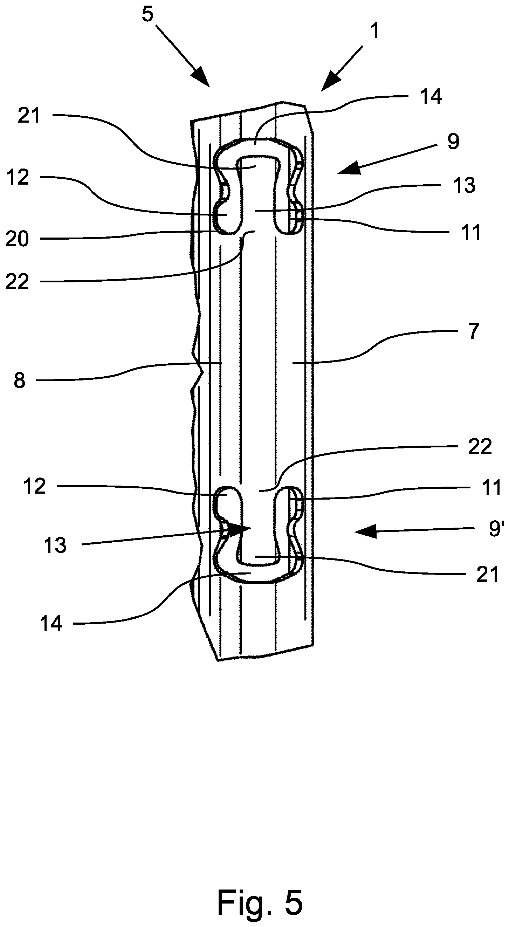

In Fig. 5 ist der untere Bereich eines Pfahls 1 dargestellt, in dem eine weitere Aufnahmetasche 9' angeordnet ist. Die Orientierung dieser untersten Aufnahmetasche 9' ist dabei relativ zu den anderen Aufnahmetaschen 9 um 180° gedreht, so dass sich die Aufnahmefenster 11, 12 vom Schlitz 13 nach oben erstrecken. Die unterste Aufnahmetasche 9' dient dazu, einzelne Drähte 10 sicher zurückzuhalten, wenn im Frühjahr Altholz aus den Rebstocken maschinell ausgeschnitten bzw. ausgehoben wird. Würden die Drähte 10 dabei in den "normalen" Aufnahmetaschen 9 verbleiben, so bestünde die Gefahr, dass die Drähte 10 durch das maschinelle Ausheben bzw. Ausschneiden des Altholzes aus den Rebstöcken aus den Aufnahmetaschen 9 herausgezogen würden und in die Maschine gelangen könnten.

Bei dem in Fig. 1 dargestellten Weinbergpfahl 1 sind im U-Rücken 2 mehrere kreisförmige Ausnehmung 25 ausgestanzt, die zur Aufnahme von Zubehörartikel wie Drahtauslegern, Drahtspannern oder Bewässerungssystemen genutzt werden können. Die Zubehörartikel können so auf einfache Art und Weise direkt an den einzelnen Weinbergpfahlen 1 deponiert werden, so dass sie bei Bedarf direkt zur Verfügung stehen.

Wie aus der in Fig. 3 gezeigten Seitenansicht des Weinbergpfahles 1 erkennbar ist, sind die U-Schenkel 3, 4 am oberen Ende des Pfahls 1 ausgehend vom U-Rücken 2 um einen Winkel α abgeschrägt, der vorzugsweise etwa 20° beträgt. Das obere Ende des Pfahles 1 ist somit in Drahtrichtung gesehen abgeschrägt, so dass der U-Rücken 2 eine größere Länge als die Endbereiche 17 der U-Schenkel 3, 4 aufweist. Durch die Abschrägung des oberen Endes des Weinbergpfahls 1 wird erreicht, dass ein beim Eindrücken des Weinbergpfahls 1 in den Boden verwendeter Drückbalken in erster Linie am U-Rücken 2 und nicht an den U-Schenkeln 3, 4 angreift. Dadurch wird verhindert, dass sich die Endbereiche 17 der U-Schenkel 3, 4 beim Eindrücken des Weinbergpfahls 1 in das Holz des Drückbalkens bohren, ohne das hierzu ein zusätzlicher Schlagschutz verwendet werden muß.

## Patentansprüche

1. Pfahl (1) aus profilgewalztem Metallblech für den Wein- oder Obstbau, insbesondere Weinbergpfahl, mit einem im Wesentlichen U-förmigen Querschnitt mit einem U-Rücken (2) und zwei U-Schenkeln (3, 4), wobei an den U-Schenkeln (3, 4) je eine nach außen vorstehende Längsrippe (5, 6) ausgebildet ist, wobei die Längsrippen (5, 6) einen nach innen offenen Querschnitt mit zwei Schenkeln (7, 8) aufweisen und in den Längsrippen (5, 6) jeweils mindestens eine nach außen offene Aufnahmetasche (9) zur Aufnahme eines Drahtes (10) ausgebildet ist,
wobei die Aufnahmetaschen (9) jeweils zwei in den Schenkeln (7, 8) der Längsrippen (5, 6) ausgebildete, auf gleicher Höhe angeordnete Aufnahmefenster (11, 12) und eine zwischen den Aufnahmefenstern (11, 12) angeordnete und sich in Längsrichtung der Längsrippe (5, 6) erstreckende Zunge (13) aufweisen, und
wobei die beiden Aufnahmefenster (11, 12) einer Aufnahmetasche (9) durch einen Schlitz (14) miteinander verbunden sind, so dass ein Draht (10) durch den Schlitz (14) in die Aufnahmetasche (9) hineingelegt bzw. aus der Aufnahmetasche (9) herausgehoben werden kann,
**dadurch gekennzeichnet,**
**dass** die Längsrippen (5, 6) am Übergang vom U-Rücken (2) zu den U-Schenkeln (3, 4) ausgebildet sind, und
**dass** an beiden Schenkeln (7, 8) der Längsrippen (5, 6) jeweils ein Vorsprung (18, 19) ausgebildet ist, so dass in beide Aufnahmefenster (11, 12) der Aufnahmetasche (9) jeweils ein Vorsprung (18, 19) hineinragt, so dass die Aufnahmefenster (11, 12) im Bereich der Vorsprünge (18, 19) jeweils eine verringerte Breite (B1) aufweisen.

2. Pfahl (1) nach Anspruch 1, **dadurch gekennzeichnet, dass** die Längsrippen (5, 6) einen im Wesentlichen V-förmigen Querschnitt aufweisen und die Zungen (13) jeweils im Bereich des Scheitels der Längsrippen (5, 6) angeordnet sind, so dass die Zungen (13) ebenfalls einen im Wesentlichen V-förmigen Querschnitt aufweisen.

3. Pfahl (1) nach Anspruch 2, **dadurch gekennzeichnet, dass** das den Schlitz (14) begrenzende freie Ende (21) der Zunge (13) breiter ausgebildet ist als der mit der Längsrippe (5, 6) verbundene Fußbereich (22) der Zunge (13).

4. Pfahl (1) nach einem der Ansprüche 1 bis 3, **dadurch gekennzeichnet, dass** die Vorsprünge (18, 19) und die Zunge (13) jeweils spiegelsymmetrisch zur Längsachse der Längsrippe (5, 6) ausgebildet sind, so dass die Aufnahmefenster (11, 12) ebenfalls spiegelsymmetrisch zur Längsachse der Längsrippe (5, 6) ausgebildet sind und in Längsrichtung des Drahtes (10) zueinander fluchten.

5. Pfahl (1) nach Anspruch 4, **dadurch gekennzeichnet, dass** die beiden Aufnahmefenster (11, 12) zusammen mit dem Schlitz (13) in Draufsicht eine etwa Ω-förmige Kontur aufweisen.

6. Pfahl (1) nach einem der Ansprüche 1 bis 5, **dadurch gekennzeichnet, dass** in beiden Längsrippen (5, 6) jeweils mehrere Aufnahmetaschen (9, 9') in Längserstreckung des Pfahls (1) übereinander angeordnet sind.

7. Pfahl (1) nach Anspruch 6, **dadurch gekennzeichnet, dass** die Orientierung der untersten Aufnahmetasche (9') relativ zu den anderen Aufnahmetaschen (9) um 180° gedreht ist.

8. Pfahl (1) nach einem der Ansprüche 1 bis 7, **dadurch gekennzeichnet, dass** die U-Schenkel (3, 4) in ihrem Endbereich (17) nach innen abgebogen sind, so dass sich einwärts gerichtete Rinnen ergeben.

9. Pfahl (1) nach einem der Ansprüche 1 bis 8, **dadurch gekennzeichnet, dass** im U-Rücken (2) mindestens eine Ausnehmung (25) vorgesehen sind.

10. Pfahl (1) nach einem der Ansprüche 1 bis 9, **dadurch gekennzeichnet, dass** die U-Schenkel (3, 4) am oberen Ende des Pfahls (1) ausgehend vom U-Rücken (2) um einen Winkel α von 15° - 25°, vorzugsweise von etwa 20°, abgeschrägt sind.

## Claims

1. Post (1) made of profile-rolled sheet metal for viticulture or orcharding, in particular vineyard post, having a substantially U-shaped cross-section with a U-back (2) and two U-legs (3, 4), wherein an outwardly projecting longitudinal rib (5, 6) is formed on each of the U-legs (3, 4), wherein the longitudinal ribs (5, 6) have an inwardly open cross section with two legs (7, 8), and at least one outwardly open receiving pocket (9) for receiving a wire (10), is formed in each of the longitudinal ribs (5, 6),
wherein the receiving pockets (9) each have two receiving windows (11, 12), formed in the legs (7, 8) of the longitudinal ribs (5, 6) and arranged at the same height, and a tongue (13) arranged between the receiving windows (11, 12) and extending in the longitudinal direction of the longitudinal rib (5, 6), and
wherein the two receiving windows (11, 12) of a receiving pocket (9) are connected to each other by a slot (14), so that a wire (10) can be placed into or lifted out of the receiving pocket (9) through the slot (14),
**characterized in**
**that** the longitudinal ribs (5, 6) are formed at the transition from the U-back (2) to the U-legs (3, 4), and
**that** a projection (18, 19) is formed on each of the two legs (7, 8) of the longitudinal ribs (5, 6), so that a projection (18, 19) projects into each of the two receiving windows (11, 12) of the receiving pocket (9), so that the receiving windows (11, 12) each have a reduced width (B1) in the region of the projections (18, 19).

2. Post (1) according to claim 1, **characterized in that** the longitudinal ribs (5, 6) have a substantially V-shaped cross-section and the tongues (13) are each arranged in the region of the apex of the longitudinal ribs (5, 6), so that the tongues (13) also have a substantially V-shaped cross-section.

3. Post (1) according to claim 2, **characterized in that** the free end (21) of the tongue (13) limiting the slot (14) is designed wider than the base region (22) of the tongue (13) connected to the longitudinal rib (5, 6).

4. Post (1) according to any one of claims 1 to 3, **characterized in that** the projections (18, 19) and the tongue (13) are each formed mirror-symmetrically with respect to the longitudinal axis of the longitudinal rib (5, 6), so that the receiving windows (11, 12) are also formed mirror-symmetrically with respect to the longitudinal axis of the longitudinal rib (5, 6) and are aligned with one another in the longitudinal direction of the wire (10).

5. Post (1) according to claim 4, **characterized in that**, the two receiving windows (11, 12) together with the slot (13) have an approximately Ω-shaped contour in plan view.

6. Post (1) according to any one of claims 1 to 5, **characterized in that** a plurality of receiving pockets (9, 9') are arranged in each of the two longitudinal ribs (5, 6) one above the other in the longitudinal extent of the post (1).

7. Post (1) according to claim 6, **characterized in that** the orientation of the lowermost receiving pocket (9') is rotated by 180° relative to the other receiving pockets (9).

8. Post (1) according to any one of claims 1 to 7, **characterized in that** the U-legs (3, 4) are bent inwards in their end region (17) so that inwardly directed grooves result.

9. Post (1) according to any one of claims 1 to 8, **characterized in that** at least one recess (25) is provided in the U-back (2).

10. Post (1) according to any one of claims 1 to 9, **characterized in that** the U-legs (3, 4) at the upper end of the post (1) are chamfered starting from the U-back (2) by an angle of 15° - 25°, preferably of about 20°.

## Revendications

1. Piquet (1) en tôle métallique laminée, destiné à la viticulture ou à l'arboriculture fruitière, en particulier piquet de vigne, ayant une section transversale substantiellement en forme de U avec un dos de U (2) et deux branches de U (3, 4), respectivement une nervure longitudinale (5, 6) dépassant vers l'extérieur étant réalisée sur les branches de U (3, 4), les nervures longitudinales (5, 6) présentant une section transversale ouverte vers l'intérieur avec deux branches (7, 8), et dans les nervures longitudinales (5, 6), respectivement au moins une poche de réception (9) ouverte vers l'extérieur est réalisée pour recevoir un fil de fer (10),
les poches de réception (9) présentant respectivement deux fenêtres de réception (11, 12) réalisées dans les branches (7, 8) des nervures longitudinales (5, 6), disposées au même niveau, et une languette (13) disposée entre les fenêtres de réception (11, 12) et s'étendant dans la direction longitudinale de la nervure longitudinale (5, 6), et
les deux fenêtres de réception (11, 12) d'une poche de réception (9) étant reliées l'une à l'autre par une fente (14) de sorte qu'un fil de fer (10) peut être inséré à travers la fente (14) dans la poche de réception (9) ou peut être retiré de la poche de réception (9),
**caractérisé**
**en ce que** les nervures longitudinales (5, 6) sont réalisées à la transition du dos de U (2) aux branches de U (3, 4), et
**en ce que** sur les deux branches (7, 8) des nervures longitudinales (5, 6), respectivement une saillie (18, 19) est réalisée de sorte que dans les deux fenêtres de réception (11, 12) de la poche de réception (9) dépasse respectivement une saille (18, 19) de sorte que les fenêtres de réception (11, 12) présentent au niveau des saillies (18, 19) respectivement une largeur diminuée (B1).

2. Piquet (1) selon la revendication 1, **caractérisé en ce que** les nervures longitudinales (5, 6) présentent une section transversale substantiellement en forme de V, et les languettes (13) sont disposées respectivement au niveau du sommet des nervures longitudinales (5, 6) de sorte que les languettes (13) présentent également une section transversale substantiellement en forme de V.

3. Piquet (1) selon la revendication 2, **caractérisé en ce que** l'extrémité libre (21) de la languette (13), délimitant la fente (14), est réalisée plus large que la zone de pied (22) de la languette (13), reliée à la nervure longitudinale (5, 6).

4. Piquet (1) selon l'une quelconque des revendications 1 à 3, **caractérisé en ce que** les saillies (18, 19) et la languette (13) sont réalisées respectivement de manière symétrique par rapport à l'axe longitudinal de la nervure longitudinale (5, 6) de sorte que les fenêtres de réception (11, 12) sont également réalisées de manière symétrique par rapport à l'axe longitudinal de la nervure longitudinale (5, 6) et sont alignées l'une sur l'autre dans la direction longitudinale du fil de fer (10).

5. Piquet (1) selon la revendication 4, **caractérisé en ce que** les deux fenêtres de réception (11, 12) présentent avec la fente (13) en vue de dessus un contour en forme de Ω.

6. Piquet (1) selon l'une quelconque des revendications 1 à 5, **caractérisé en ce que** dans les deux nervures longitudinales (5, 6), respectivement plusieurs poches de réception (9, 9') sont disposées les unes au-dessus des autres dans l'extension longitudinale du piquet (1).

7. Piquet (1) selon la revendication 6, **caractérisé en ce que** l'orientation de la poche de réception la plus basse (9') est tournée sur 180° par rapport aux autres poches de réception (9).

8. Piquet (1) selon l'une quelconque des revendications 1 à 7, **caractérisé en ce que** les branches de U (3, 4) sont courbées vers l'intérieur dans leur zone d'extrémité (17) de façon à former des canaux dirigés vers l'intérieur.

9. Piquet (1) selon l'une quelconque des revendications 1 à 8, **caractérisé en ce qu'**au moins un évidement (25) est prévu dans le dos de U (2).

10. Piquet (1) selon l'une quelconque des revendications 1 à 9, **caractérisé en ce que** les branches de U (3, 4) sont biseautées à l'extrémité supérieure du piquet (1) en partant du dos de U (2) d'un angle α de 15° à 25°, de préférence égal à environ 20°.
